# EUROPÄISCHE PATENTSCHRIFT

(11) **EP 1 639 266 B1**
(45) Veröffentlichungstag und Bekanntmachung des Hinweises auf die Patenterteilung: **30.08.2006**
(21) Anmeldenummer: 04730197.3
(22) Anmeldetag: 29.04.2004
(51) Int. Cl.: F16D 25/12, F16D 13/58

(54) **KUPPLUNG MIT EINER FEDEREINRICHTUNG UND VERFAHREN ZU DEREN BETRIEB**
CLUTCH COMPRISING A SPRING DEVICE AND METHOD FOR OPERATING THE SAME
ACCOUPLEMENT PRESENTANT UN DISPOSITIF A RESSORT, ET PROCEDE PERMETTANT SON FONCTIONNEMENT

(30) Priorität: 27.06.2003 DE 10329123
(43) Veröffentlichungstag der Anmeldung: 29.03.2006
(73) Patentinhaber: Christian Bauer GmbH & Co., 73642 Welzheim (DE)
(72) Erfinder: BRÜCKNER, Lothar, 71229 Leonberg (DE); KÄSTNER, August, 73642 Welzheim (DE)
(74) Vertreter: Rotermund, Hanns-Jörg
(86) Internationale Anmeldenummer: PCT/DE2004/000900
(87) Internationale Veröffentlichungsnummer: WO 2005/010391

(56) Entgegenhaltungen:
- DE-A- 10 108 186
- DE-A- 10 161 205
- DE-A- 10 316 445
- US-A- 5 641 048

## Beschreibung

Die Erfindung betrifft eine Kupplung nach dem Oberbegriff des Patentanspruchs 1 sowie ein Verfahren zum Betrieb einer solchen Kupplung.

Das Betätigen einer gattungsgemäßen Kupplung wird unter anderem von den Eigenschaften der Federeinrichtung beeinflusst. Die von der Federeinrichtung ausgehende Federkraft kann herstellungsbedingt variieren oder sich betriebszeitabhängig verändern.

Ein Lastschaltgetriebe, beispielsweise ein stufenloses, automatisches Lastschaltgetriebe für Fahrzeuge mit einer gattungsgemäßen Kupplung ist aus DE 198 22 193 A1 bekannt. Es handelt sich dort um eine hydrodynamisch betätigte Lamellenkupplung. Die Schließkraft dieser Kupplung erzeugt ein Hydraulikzylinder, der einen auf die Kupplungslamellen einwirkenden Kolben gegen die Kraft einer Tellerfeder betätigt. Die Öffnungskraft wird von der Tellerfeder als Federeinrichtung dieser Kupplung aufgebracht. Das Öffnen der Kupplung, das durch die Tellerfeder bewirkt wird, muss für ein optimales Funktionieren des Schaltgetriebes während einer exakt vorgegebenen Zeitdauer, das heißt innerhalb eines bestimmten Zeitfensters, erfolgen. Zu diesem Zweck wird der Hydraulikdruck innerhalb des für das Schließen der Kupplung zuständigen Hydraulikzylinders durch Drucksensoren überwacht und als Steuer- und/oder Regelgröße für das Betätigen der Kupplung verwendet. Die von jenen Drucksensoren erhaltenen Messwerte sind unter anderem abhängig von der Temperatur bedingt durch die Viskositätsänderung der Hydraulikflüssigkeit.

Aus US 5,641,048 A ist eine Reibungskupplung bekannt, bei der ein Druckschieber federbelastet ist, wobei der von der Feder ausgehende Anpressdruck detektiert wird. Zum Ausgleich eines Verschleißes bei der Reibungskupplung ist eine Nachstelleinrichtung vorgesehen, die in Abhängigkeit des detektierten Anpressdruckes der Feder zu einem Druckausgleich betätigt wird. Die Betätigung der Nachstelleinrichtung soll nicht während des Kupplungsbetriebes erfolgen, sondern vielmehr möglichst bei Kupplungsstillstand oder eventuell auch noch in einem niedrigen Drehzahlbereich, der unterhalb des Drehzahlbereiches bei üblichem Kupplungsbetrieb liegt. Bei jener vorbekannten Einrichtung sind insbesondere Blockiervorrichtungen vorgesehen, um Verstellungen durch die Nachstelleinrichtung während des Kupplungsbetriebes sicher zu vermeiden.

DE 101 61 205 A1 beschreibt eine Kupplung, bei der das Kupplungs-Druckstück durch die Kraft einer zwischen einer Einrück- und einer Ausrückposition verlagerbaren Tellerfeder bewegt wird. Diese Tellerfeder ist mit einer Einstelleinrichtung versehen, durch die eine Nachstellung zum Ausgleich eines Kupplungsverschleißes möglich ist. Die Einstellvorrichtung ist dabei mit einem Sensor versehen, durch den die Notwendigkeit und das Maß einer Nachstellung erfasst werden.

Eine aus DE 101 08 186 A bekannte Kupplung betrifft lediglich eine Nachstelleinrichtung für eine Kupplung.

Die Erfindung beschäftigt sich mit dem Problem, bei einer gattungsgemäßen Kupplung ein möglichst zeitgenau gesteuertes Öffnen und/oder Schließen der Kupplung zu ermöglichen. Dabei sollen auch Veränderungen, die sich aus einer Veränderung der Eigenschaften der Federeinrichtung ergeben können, sicher vermieden werden.

Gelöst wird dieses Problem bei einer gattungsgemäßen Lamellenkupplung, bei der die Stellkraft nach den jeweils aktuell herrschenden Betriebszuständen geregelt wird und zwar auf einen vorbestimmten Wert durch eine Ausführung nach den kennzeichnenden Merkmalen des Patentanspruchs 1.

Erfindungsgemäß wird dieser vorbestimmte Wert kontrolliert durch Messwerte aus einem Sensor, der an der Federeinrichtung und/oder mindestens an einem ihrer Widerlager vorgesehen ist. Von der gattungsgemäßen Einrichtung nach DE 198 22 193 A1 unterscheidet sich die Erfindung insbesondere dadurch, dass die Druckwertkontrolle nicht durch eine Druckwertmessung innerhalb der Hydraulikdruckquelle erfolgt.

Dieser Unterschied besteht auch gegenüber den übrigen vorstehend zum Stand der Technik angeführten Kupplungen. Denn jene Kupplungen besitzen jeweils Drucksensoren an den Federeinrichtungen, durch die jene Federeinrichtungen bei einem Kupplungsverschleiß entsprechend den gemessenen Druckveränderungen nachgestellt werden können. Jene vorbekannten Kupplungen besitzen keine Regelung des Anpressdruckes des Druckschiebers der Kupplung nach den Druckmesswerten des an der Federeinrichtung vorgesehenen Drucksensors.

Vorteilhafte und zweckmäßige Ausgestaltungen der Einrichtung nach Anspruch 1 sind Gegenstand der Unteransprüche 2 bis 4.

Ein vorteilhaftes Verfahren zum Betreiben einer erfindungsgemäßen Kupplung ist Gegenstand des Anspruchs 5.

Bei einer Federeinrichtung, die aus mindestens einer Tellerfeder oder zusammen mit einer Wellfeder besteht, ist der Sensor vorteilhafterweise direkt an der mindestens einen Tellerfeder und/oder Wellfeder in einem nicht an einem Widerlager anliegenden Bereich angebracht. Möglich ist es selbstverständlich auch, den Sensor an einem jeweiligen Widerlager der Federeinrichtung vorzusehen.

Bei der Verwendung von Tellerfedern und/oder Wellfedern ist es besonders vorteilhaft, als Sensor eine piezoresistive, amorphe, fest auf einem nicht an einem Widerlager direkt anliegenden Oberflächenbereich aufgebrachte Kohlenstoffschicht (z.B. DLC(Diamond-Like-Carbon)-Schicht) vorzusehen. Die Kohlenstoffschicht muss lediglich eine Dicke von 10 nm bis 500 µm, vorzugsweise 10 nm bis 20 µm, besitzen. Derartige Schichten, deren Art der Aufbringung durch beispielsweise ein PVD(Physical-Vapor-Deposition)- oder CVD(Chemical-Vapor-Deposition)-Verfahren erfolgen kann und aus diesen Schichten hergestellte Sensoren zur Zustandsbestimmung von Kenngrößen aus mechanischen Komponenten sind in der DE 199 54 164 A1 beschrieben. Ferner sind zur Kontrolle kraftschlüssiger Verbindungen aus DE 198 31 372 A1 mit Meßschichten versehene Unterlegscheiben bekannt.

Ein erfindungsgemäßes Verfahren zum Betreiben eines gattungsgemäßen Schaltgetriebes besteht darin, eine auf die Kupplung einwirkende Verstellkraft von durch den Sensor aktuell ermittelten Kennwerten der Federeinrichtung und/oder deren mindestens eines Widerlagers abhängig zu steuern und/oder zu regeln.

Die Übertragung der in dem Sensor ermittelten Messwerte kann in einer besonders vorteilhaften Weise über einen telemetrischen Signalabgriff erfolgen. Die hohe Messempfindlichkeit der erfindungsgemäßen Sensoren eignet sich besonders gut für eine telemetrische Signalauswertung. Bezüglich des Prinzips hier anwendbarer telemetrischer Signalauswerteverfahren wird im Stand der Technik beispielsweise verwiesen auf DE 40 34 019 C1, EP 0 533 709 B1 und DE 37 14 195 A1.

Ein nachfolgend noch näher erläutertes, vorteilhaftes Ausführungsbeispiel ist in der Zeichnung dargestellt.

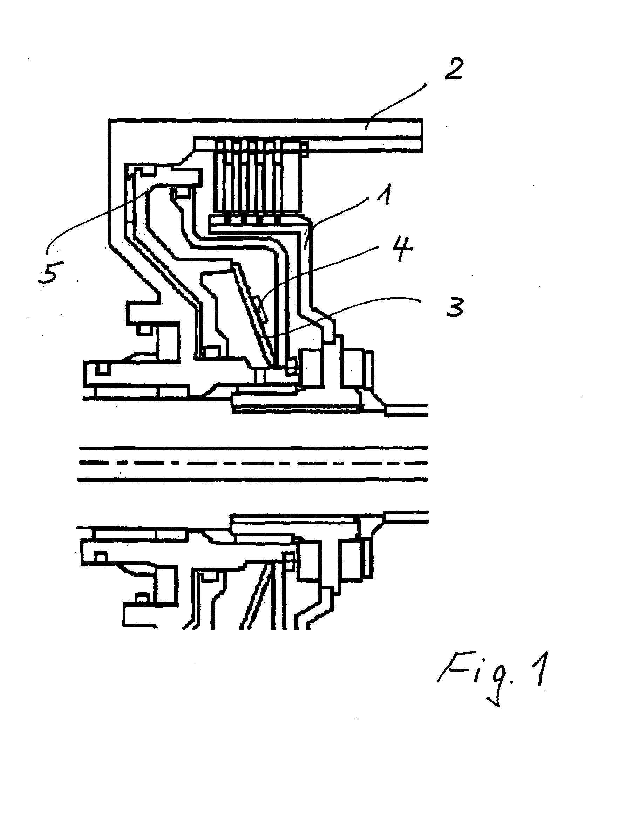

In dieser zeigt die einzige
- Fig. 1: einen Halbschnitt durch einen prinzipiellen Aufbau einer Lamellenkupplung eines Schaltgetriebes nach DE 198 22 193 A1.

Ein erster und ein zweiter, jeweils drehbar gelagerter Körper 1, 2 sind kraftschlüssig über ineinander greifende Lamellen miteinander verbindbar.

An dem zweiten Körper 2 ist drehfest, jedoch axial verschiebbar gelagert ein Druckschieber 5. Mit diesem Druckschieber 5 können die Lamellen der beiden Körper 1, 2 zum Schließen der Kupplung kraftschlüssig aneinander gedrückt werden.

Zum Öffnen der Kupplung dient eine Tellerfeder als Federeinrichtung 3, durch die der Druckschieber 5 zur Erzielung eines Öffnungszustandes der Kupplung verschoben wird. Zum Schließen der Kupplung wirkt ein in der Zeichnung nicht dargestellter Hydraulikdruck auf den Druckschieber 5 ein und zwar gegen die Kraft der Tellerfeder 3. Der Druckschieber 5 bestimmt die Zeitdauer der unter der Kraft der Tellerfeder 3 öffnenden Kupplung.

Die Tellerfeder 3 ist mit einer DLC-Schicht als Sensor 4 versehen. Die von dem Sensor 4 ermittelten, der aktuellen Federkraft der Tellerfeder 3 analogen Messwerte werden bevorzugt telemetrisch einer elektronischen Auswerteeinheit zugeleitet. Von dort aus können die Messwerte zur Steuerung bzw. Regelung der auf die Kupplung einwirkenden Stellkraft verwertet werden. Die der Tellerfeder 3 beim Öffnen der Kupplung entgegenwirkende Verzögerungskraft des an dem Druckschieber 5 anliegenden Hydraulikdruckes soll im Sinne der Beschreibung der Erfindung Bestandteil der vorgenannten auf die Kupplung einwirkenden Stell- bzw. Verstellkraft sein.

In der elektronischen Auswerteeinheit können die tatsächlichen von dem Sensor 4 gemessenen Messwerte zur Berücksichtigung diese Messwerte beeinflussender Zustandseigenschaften in oder an der Federeinrichtung modifiziert werden.

## Patentansprüche

1. Lamellenkupplung, bei der jeweils drehbar ein erster Körper (1) und ein zweiter Körper (2), in dem drehfest, jedoch axial verschiebbar ein an einem Hydraulikdruck anliegender Druckschieber (5) gelagert ist, kraftschlüssig über ineinandergreifende, von dem Druckschieber (5) kraftbeaufschlagbare Lamellen miteinander verbindbar sind, eines insbesondere Schaltgetriebes für insbesondere Fahrzeuge mit einer die in einer Kraftquelle erzeugte Verstellkraft zum Schließen der Kupplung beeinflussenden Federkraft einer Federeinrichtung, wobei die Größe dieser Verstellkraft geregelt wird,
**dadurch gekennzeichnet,**
**dass** die Federeinrichtung (3) und/oder mindestens eines ihrer Widerlager mit einem, Festkörperveränderungen erfassenden Sensor (4) zur Bestimmung der von der Federeinrichtung (3) jeweils ausgehenden Federkraft versehen und eine Einrichtung zur Übertragung der ermittelten Messwerte zur Regelung der Verstell-Kraftquelle vorgesehen ist, wobei eine der Federeinrichtung beim Öffnen der Kupplung entgegenwirkende Verzögerungskraft des an dem Druckschieber (5) anliegenden Hydraulikdruckes Bestandteil der auf die Kupplung einwirkenden Stell- beziehungsweise Verstellkraft ist.

2. Kupplung nach Anspruch 1,
**dadurch gekennzeichnet,**
**dass** die Federeinrichtung (3) aus zumindest einer Tellerfeder oder aus einer Kombination einer Tellerfeder mit einer Wellfeder besteht.

3. Kupplung nach Anspruch 1 oder 2,
**dadurch gekennzeichnet,**
**dass** der Sensor (4) als eine piezoresistive, amorphe, fest auf einem Oberflächenbereich der Federeinrichtung (3) oder deren Widerlager aufgebrachte Kohlenstoffschicht ausgebildet ist.

4. Kupplung nach einem der vorhergehenden Ansprüche,
**dadurch gekennzeichnet,**
**dass** der Sensor (4) mit Mitteln für einen telemetrischen Signalabgriff versehen ist.

5. Verfahren zum Betreiben einer Kupplung nach einem der vorhergehenden Ansprüche,
**dadurch gekennzeichnet,**
**dass** die auf die Kupplung einwirkende Verstellkraft von durch den Sensor (4) aktuell ermittelten Kennwerten der Federeinrichtung (3) und/oder deren mindestens einen Widerlagers abhängig gesteuert und/oder geregelt wird.

## Claims

1. A multi-disk clutch in which a first body (1) and a second body (2), where a pressure slide (5), in contact with a hydraulic pressure, is mounted rigidly, but so that it can be axially displaced, can be positively connected to each other by disks that engage in each other and can be loaded by the force of the pressure slide (5), in particular of a gear for motor vehicles in particular, with a resilience of a spring device that influences the adjusting force generated in a force source for closing the clutch, wherein the size of this adjusting force is regulated, **characterised in that** the spring device (3) and/or at last one of its thrust bearings is provided with a sensor (4) that detects solid body variations for determining the resilience deriving from each spring device (3), and a device is provided for transmitting the determined measured values for regulating the adjusting force source, wherein a delaying force of the hydraulic pressure in contact with the pressure slide (5), counteracting the spring device when the clutch is opened, constitutes a component of the adjusting force acting on the clutch.

2. The clutch according to Claim 1, **characterised in that** the spring device (3) consists of at least one cup spring or of a combination of a cup spring with a corrugated spring.

3. The clutch according to Claim 1 or 2, **characterised in that** the sensor (4) is designed as a piezoresistive, amorphous carbon layer applied to a surface area of the spring device (3) or its thrust bearings.

4. The clutch according to any one of the preceding claims, **characterised in that** the sensor (4) is provided with means for a telemetric signal pick-up.

5. A method for operating a clutch according to any one of the preceding claims, **characterised in that** the adjusting force acting on the clutch is controlled and/or regulated dependent on characteristics of the spring device(3) and/or at least one of its thrust bearings currently determined by the sensor (41).

## Revendications

1. Embrayage à disques multiples, dans lequel un premier corps (1) et un second corps (2), dans lequel est monté de façon solidaire, mais avec une possibilité de déplacement dans la direction axiale, un coulisseau (5) soumis à une pression hydraulique, peuvent être assemblés entre eux par force d'adhérence par l'intermédiaire de disques s'engageant les uns dans les autres, sollicitables en force par le coulisseau (5), d'en particulier une boîte de vitesses pour en particulier des véhicules, avec une force de ressort, influant sur la force de déplacement produite dans une source de force pour la fermeture de l'embrayage, d'un dispositif à ressort, la grandeur de cette force de déplacement étant réglée,
**caractérisé en ce que**
le dispositif à ressort (3) et/ou au moins l'une de ses butées est muni d'un capteur (4) détectant des variations de corps solides pour la détermination de la force de ressort issue respectivement du dispositif à ressort (3) et un dispositif est prévu pour la transmission des valeurs de mesure déterminées à une régulation de la source de force de déplacement, un effort retardateur, qui contrecarre le dispositif à ressort lors de l'ouverture de l'embrayage, de la pression hydraulique s'appliquant sur le coulisseau de pression (5), faisant partie de la force de réglage ou de déplacement agissant sur l'accouplement.

2. Embrayage suivant la revendication 1, **caractérisé en ce que** le dispositif à ressort (3) est constitué d'au moins un ressort à disques ou d'une combinaison d'un ressort à disques avec une rondelle ondulée.

3. Embrayage suivant l'une des revendications 1 et 2, **caractérisé en ce que** le capteur (4) est réalisé sous forme de couche de carbone piézorésistive, amorphe, appliquée fixement sur une zone superficielle du dispositif à ressort (3) ou de ses butées.

4. Embrayage suivant l'une des revendications précédentes, **caractérisé en ce que** le capteur (4) est muni de moyens pour une prise de signaux télémétrique.

5. Procédé pour le fonctionnement d'un embrayage suivant l'une des revendications précédentes, **caractérisé en ce que** la force de déplacement agissant sur l'embrayage est contrôlée et/ou réglée en fonction de caractéristiques, déterminées actuellement par le capteur (4), du dispositif à ressort (3) et/ou d'au moins l'une de ses butées.
